(19) Europäisches Patentamt
European Patent Office
Office européen des brevets

(11) **EP 1 365 894 B1**

(12) **EUROPÄISCHE PATENTSCHRIFT**

(45) Veröffentlichungstag und Bekanntmachung des Hinweises auf die Patenterteilung:
**06.07.2005 Patentblatt 2005/27**

(51) Int Cl.$^7$: **B25J 9/16**, G01B 11/00, G06T 5/00

(21) Anmeldenummer: 02719935.5

(22) Anmeldetag: **27.02.2002**

(86) Internationale Anmeldenummer:
**PCT/EP2002/002055**

(87) Internationale Veröffentlichungsnummer:
**WO 2002/070211 (12.09.2002 Gazette 2002/37)**

(54) **KOORDINATENMESSGERÄT MIT EINEM VIDEOTASTKOPF**

CO-ORDINATE MEASURING DEVICE WITH A VIDEO PROBEHEAD

APPAREIL DE MESURE DE COORDONNEES A TETE DE PALPAGE VIDEO

(84) Benannte Vertragsstaaten:
**DE FR GB IT**

(30) Priorität: **08.03.2001 DE 10111130**

(43) Veröffentlichungstag der Anmeldung:
**03.12.2003 Patentblatt 2003/49**

(73) Patentinhaber: **Carl Zeiss Industrielle Messtechnik GmbH**
**73447 Oberkochen (DE)**

(72) Erfinder:
• **KERN, Rudolf**
**73430 Aalen (DE)**
• **RUCK, Otto**
**73479 Pfahlheim (DE)**

(74) Vertreter: **Henckell, Carsten**
**Carl Zeiss**
**Patentabteilung**
**73446 Oberkochen (DE)**

(56) Entgegenhaltungen:
EP-A- 0 392 961      EP-A- 0 532 169
US-A- 4 707 647      US-A- 5 982 491

• **MANIERE E C ET AL: "Robotic contour following based on visual servoing" INTELLIGENT ROBOTS AND SYSTEMS '93, IROS '93. PROCEEDINGS OF THE 1993 IEIEE/RSJ INTERNATIONAL CONFERENCE ON YOKOHAMA, JAPAN 26-30 JULY 1993, NEW YORK, NY, USA,IEEE, US, 26. Juli 1993 (1993-07-26), Seiten 716-722, XP010219317 ISBN: 0-7803-0823-9**

EP 1 365 894 B1

**Beschreibung**

Die Erfindung betrifft ein Koordinatenmeßgerät mit einem Videotastkopf. Ein derartiges Koordinatenmeßgerät ist beispielsweise in der europäischen Patentanmeldung EP 0 532 169 A1 beschrieben. Hierin ist am vertikalen Meßarm des Koordinatenmeßgerätes eine Videokamera befestigt, die der Vermessung eines Werkstückes dient. Um Werkstücke genau vermessen zu können, wird die Videokamera über das zu vermessende Merkmal, beispielsweise die Kante eines Werkstückes, hinweg bewegt. Sobald das zu vermessende Merkmal ein vordefiniertes Pixel, das vorzugsweise in der Mitte des Sehfeldes der Videokamera angeordnete ist, passiert, wird ein Triggerimpuls von der Bildverarbeitungseinrichtung ausgelöst, der das Auslesen der Maßstabswerte in den drei Koordinatenrichtungen x, y, z veranlaßt.

Obwohl sich mit dem beschriebenen Koordinatenmeßgerät Werkstücke gut vermessen lassen, ist es nur möglich vordefinierte Meßabläufe durchzuführen. Werkstücke, deren Kontur nicht vorbekannt ist, können mit dem hierin beschriebenen Verfahren folglich nicht vermessen werden.

Darüber hinaus ist aus der Produktinformation der Firma Carl Zeiss mit dem Titel OMC 850 ein Koordinatenmeßgerät beschrieben, das sowohl eine Videokamera, wie auch einen mechanischen Tastkopf zum Vermessen eines Werkstückes verwendet. Der Videotastkopf kann hierbei die Kanten von Werkstücken aufnehmen, wobei über eine Graubildauswertung die Lage der Kante festgestellt werden kann. Zusätzlich kann mit dem mechanischen Tastkopf das Werkstück mechanisch angetastet werden.

Auch dieses Koordinatenmeßgerät ist nur in der Lage mit dem optischen Tastkopf ein Werkstück mit bekannten Konturen zu vermessen.

Ein Koordinatenmeßgerät gemäß Oberbegriff des Anspruchs 1 und ein Verfahren zur Steuerung eines solchen geräts gemäß Oberbegriff des Anspruchs 9 sind aus der Schrift MANIERE E C ET AL: "Robotic contour following based on visual servoing" INTELLIGENT ROBOTS AND SYSTEMS '93, IROS '93. PROCEEDINGS OF THE 1993 IEIEE/RSJ INTERNATIONAL CONFERENCE ON YOKOHAMA, JAPAN 26-30 JULY 1993, NEW YORK, NY, USA,IEEE, US bekannt.

Hiervon ausgehend liegt unserer Erfindung die Aufgabe zugrunde ein neues Koordinatenmeßgerät mit Videotastkopf und ein zugeordnetes Verfahren vorzuschlagen, mit dem automatisch die Kanten eines Werkstückes mit unbekannter Werkstückkontur abgetastet werden können.

Die Aufgabe wird gemäß den Merkmalen der unabhängigen Ansprüche 1 und 9 gelöst.

Zur Ableitung der Vorschubdaten muß über eine Bildverarbeitung zunächst aus dem Bild der Verlauf der die Kontur definierenden Kante bestimmt werden. Dies ist relativ einfach möglich aufgrund des Farbunterschiedes, der sich zwischen dem Bereich des Bildes ergibt, der die Oberfläche des Werkstückes zeigt und dem Bereich des Bildes, der nicht die Oberfläche des Werkstückes zeigt Die Auswertung kann beispielsweise über eine Graubildverarbeitung erfolgen. Es sei an dieser Stelle ausdrücklich erwähnt, daß mit der Kante des Werkstückes selbstverständlich auch eine Kante gemeint sein kann, die künstlich erzeugt wird, beispielsweise durch ein Klebeband, das auf die Werkstückoberfläche aufgeklebt wird und vorzugsweise eine andere Farbe als die Werkstückoberfläche aufweist. Die Kontur des Werkstückes ist dann natürlich der Verlauf der durch das Klebeband erzeugten Kante

Die Ableitung der Vorschubdaten erfolgt besonders durch Auswertung des Videobildes. Die Auswertung umfaßt hierbei, daß ausgehend von einem vordefinierten Basispunkt eine Gerade zur Kante des Werkstückes bestimmt wird, die bevorzugt näherungsweise einer Normalen auf die Kante entspricht. Der Schnittpunkt dieser Geraden mit der Kante des Werkstückes kann dann gleichzeitig als aktuell angetasteter Meßpunkt verwendet und als solcher aufgezeichnet werden.

Prinzipiell ist eine unmittelbare Auswertung des Videobildes möglich, wobei der Basispunkt dann vorzugsweise im Mittelpunkt des Videobildes angeordnet sein sollte. Vorzugsweise sollte jedoch nur ein Teilbereich des durch den Videotastkopf aufgenommenen Videobildes, der im folgenden mit Auswertebereich bezeichnet wird, ausgewertet werden. Als Auswertebereich eignet sich besonders vorteilhaft ein Kreis wegen seiner rotationssymmetrischen Eigenschaften, wobei als Basispunkt der Mittelpunkt des Kreises gewählt werden sollte. Selbstverständlich könnte als Auswertebereich prinzipiell auch eine andere geometrische Fläche, wie beispielsweise ein quadratischer Bereich oder ein gleichseitig dreieckiger Bereich verwendet werden. Als Basispunkt würde sich beim quadratischen Bereich der Kreuzungspunkt der Flächendiagonalen eignen, beim dreieckigen Bereich der Kreuzungspunkt der Winkelhalbierenden. Obwohl die zentrale Lage des Basispunktes besonders Vorteilhaft im Zentrum des Auswertebereiches liegt, ist dies natürlich auch nicht zwingend notwendig.

Die Bestimmung dieser Geraden erfolgt, indem für den Flächenbereich, der entweder die Oberfläche des Werkstückes oder nicht die Oberfläche des Werkstückes beinhaltet, der Flächenschwerpunkt berechnet wird und dieser mit dem Basispunkt zu einer Geraden verbunden wird. Der Schnittpunkt dieser Geraden mit der Kante des Werkstückes wird, wie bereits eben erläutert, als aktuell angetasteter Meßpunkt definiert und kann als solcher aufgezeichnet werden.

Die Vorschubdaten, mit denen die Mechanik des Koordinatenmeßgerätes und damit der Videotastkopf in den drei Koordinatenrichtungen verfahren wird, sollten nun so gewählt werden, daß in der nächsten Position, in der erneut ein Videobild ausgewertet wird, der Abstand zwischen dem Basispunkt und der Kante möglichst klein wird. Dazu sollte der Vorschub so gewählt werden, daß proportional zum Abstand zwischen dem Basispunkt und dem ermittelten Meßpunkt ein Vorschub in Richtung der besagten Geraden erzeugt wird. Andererseits sollten die Vorschubdaten auch so generiert werden, daß ein Vorschub tangential zur Kante erfolgt, sodaß also der Videotastkopf entlang der Kante bewegt wird. Diese tangentiale Komponente wird man besonders geeignet konstant vorsehen und lotrecht zur bestimmten Geraden ausrichten.

Als Vorschubdaten wird man vorteilhaft Vorschubgeschwindigkeiten ermitteln, die dann auf die Antriebe der Mechanik in den drei Koordinatenrichtungen aufgeschaltet werden. Natürlich können die Vorschubdaten auch in Form von Sollagen vorgegeben werden, in die der Tastkopf dann vor der Mechanik bewegt wird.

Damit das Koordinatenmeßgerät Werkstücke vermessen kann, die beliebig geneigt sind, sollte der Videotastkopf an einer Dreh-Schwenkeinheit befestigt werden, die wenigstens zwei Drehgelenke mit senkrecht aufeinander stehenden Drehachsen aufweist, so daß der Videotastkopf in beliebige Lagen verdreht und verschwenkt werden kann.

Weitere Vorteile und Weiterbildungen der Erfindung sollen nunmehr anhand der Figuren beschrieben werden. Hierin zeigen:

Figur 1: ein erfindungsgemäßes Koordinatenmeßgerät mit einem Videotastkopf (6) und

Figur 2: ein Bild des Videotastkopfes (6)

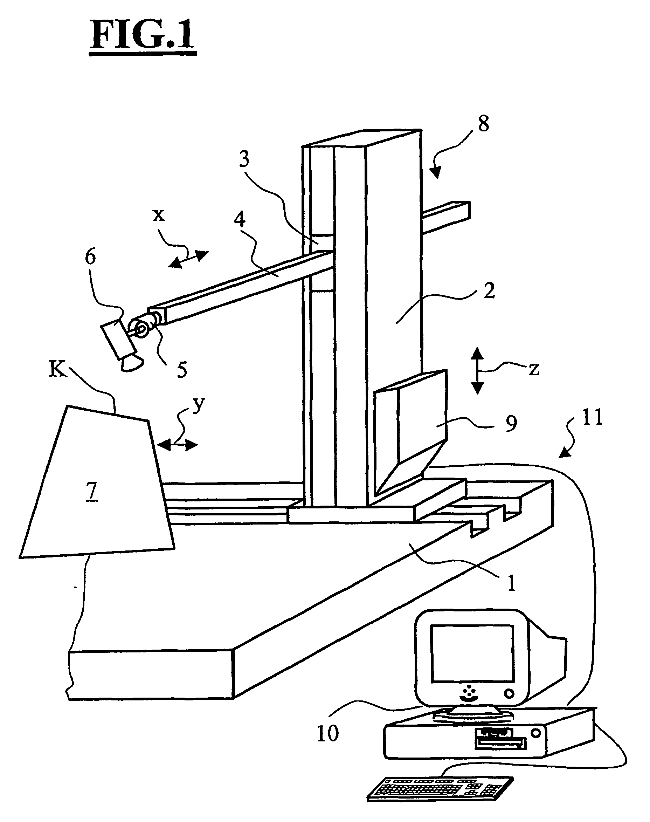

Figur 1 zeigt ein erfindungsgemäßes Koordinatenmeßgerät in sogenannter Ständerbauweise. Das Koordinatenmeßgerät weist hierbei einen Videotastkopf (6) auf, der von dem zu vermessenden Werkstück (7) Videobilder aufnimmt und an eine entsprechende Steuer- und Auswerteeinheit (11) zur Auswertung überträgt. Der Videotastkopf (6) ist über eine Drehschwenkeinheit (5) am Meßarm (4) einer Mechanik (8) des Koordinatenmeßgerätes befestigt. Die Drehschwenkeinheit (5) weist zwei Drehgelenke mit jeweils senkrecht aufeinander stehenden Drehachsen auf, über die der Videotastkopf (6) so verdreht und verschwenkt werden kann, daß seine optische Achse senkrecht zur vermessenen Oberfläche des zu vermessenden Werkstückes (7) steht.

Die Mechanik (8) dient dazu den Videotastkopf (6) in den drei Koordinatenrichtungen (x,y,z) zu verfahren und umfaßt dazu den Meßarm (4) und einen Kreuzschieber (3), an dem der Meßarm (4) in der mit dem Pfeil (x) bezeichneten Koordinatenrichtung beweglich geführt ist. Um den Kreuzschieber (3) bewegen zu können, umfaßt die Mechanik (8) ferner einen Ständer (2), an dem der Kreuzschieber (3) in der mit dem Pfeil (z) bezeichneten Richtung beweglich geführt ist Der Ständer (2) seinerseits ist über entsprechende Führungen auf dem Meßtisch (1) in der mit dem Pfeil (y) bezeichneten Richtung beweglich geführt. Somit kann der Videotastkopf (6) über die eben beschriebene Mechanik (8) in allen drei Koordinatenrichtungen (x, y, z) gegenüber dem Werkstück (7) verfahren werden. Die Mechanik (8) weist in den entsprechenden Koordinatenrichtungen (x, y, z) Maßstäbe mit zugeordneten Ableseköpfen auf, über die die Position des Videotastkopfes (6) in den Koordinatenrichtungen ausgelesen und an die Auswerteeinheit (11) zur Meßdatenauswertung übergeben werden kann. Außerdem weist die Mechanik (8) Antriebe auf, über die die Mechanik (8) in den drei Koordinatenrichtungen (x, y,z) bewegt werden kann. Zur Erstellung und Durchführung der Meßabläufe weist das Koordinatenmeßgerät eine Steuer- und Auswerteeinheit (11) auf, die hier in diesem speziellen Ausführungsbeispiel einen Auswerterechner (10) umfaßt, in dem die Meßabläufe erstellt und ausgewertet werden und eine Steuerung (9), die die Antriebe der Mechanik (8) ansteuert und die Meßwerte von den Maßstäben und des Videotastkopfes (6) ausliest und zur weiteren Verarbeitung an den Auswerterechner (10) weiter reicht. Der Auswerterechner (10) und die Steuerung (9) sind dazu über einen Bus miteinander verbunden.

Das Koordinatenmeßgerät ist so ausgelegt, daß hiermit automatisch die Kante (K) des Werkstückes (7) abgetastet werden kann, ohne die konkrete Kontur des Werkstückes (7) vorher genau kennen zu müssen.

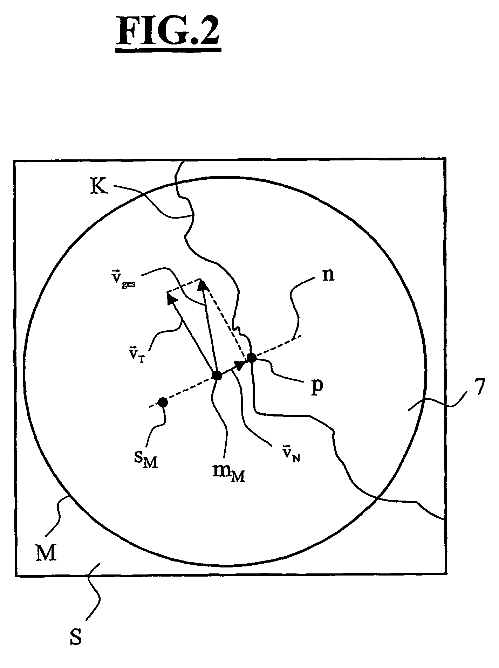

Wie dies im Einzelnen funktioniert, soll nunmehr anhand von Figur 2 dargestellt werden. Figur 2 zeigt ein einzelnes Bild des Videotastkopfes (6) aus Figur 1. Wie hieraus zu sehen, ist das Videobild auf die Kante (K) des Werkstückes (7) gerichtet. Die rechte Bildhälfte zeigt hierbei die Oberfläche des zu vermessenden Werkstückes (7). Um nunmehr einen Meßpunkt (P) der Kante (K) des Werkstückes (7) vermessen zu können, wird aus dem Sehfeld des Videotastkopfes (6) also aus dem Videobild (S) durch die Bildverarbeitungseinrichtung selektiv ein Auswertebereich (M) analysiert, der hier kreisförmig ist. Damit an der Kante (K) ein definierter Meßpunkt (P) bestimmt werden kann, wird durch einen entsprechenden Algorithmus eine Gerade (n) bestimmt, die näherungsweise der Normalen auf die Kante (K) entspricht Die Bestimmung erfolgt, in dem in demjenigen Teil des Auswertebereiches (M), der nicht das Werkstück (7) abbildet, der Flächenschwerpunkt ($s_M$) berechnet wird. In einem nächsten Schritt wird durch den errechneten Flächenschwerpunkt ($s_M$) und den Basispunkt ($m_M$) des Auswertebereiches (M), der hier als Mittelpunkt des kreisförmigen Auswertebereiches (M) definiert ist, die Gerade (n) gelegt. Derjenige Punkt, an dem die Gerade (n) die Kante (K) des Werkstückes (7) schneidet wird als Meßpunkt (P) definiert und als entsprechender Meßwert übernommen. Der Punkt innerhalb des Bildes des Videotasters (6) wird dann mit den Maßstabswerten der Mechanik (8) überlagert, sodaß hieraus ein aktueller Meßpunkt abgeleitet werden kann.

Da, wie bereits oben ausgeführt, das Koordinatenmeßgerät in erfinderischer Weise die gesamte Kontur des Werkstückes (7) automatisch abtasten soll, werden des weiteren aus der Geraden (n) die weiteren Vorschubdaten für die Mechanik (8) abgeleitet, entsprechend denen die Mechanik (8) den Videotastkopf (6) in den drei Koordinatenrichtungen (x,y,z) verstellt. Die Vorschubdaten werden hier als Vorschubgeschwindigkeit ($\vec{v}_{ges}$) ermittelt. Die Ermittlung der Vorschubgeschwindigkeit ($\vec{v}_{ges}$) erfolgt hierbei, indem zunächst eine Tangentialgeschwindigkeit ($\vec{v}_T$) in tangentialer Richtung zur Kante (K) und damit normal zur Gerade (n) bestimmt wird. Diese Tangentialgeschwindigkeit ($\vec{v}_T$) entspricht dem eigentlichen Vorschub zur Bewegung des Videotastkopfes (6) entlang der Kante (K) und ist von Ihrem Betrag konstant. Zusätzlich zu der Tangentialgeschwindigkeit ($\vec{v}_T$) wird außerdem eine Normalgeschwindigkeit ($\vec{v}_N$) ermittelt, die in Richtung der Geraden (n) gerichtet ist und proportional zum Abstand des Mittelpunktes ($m_M$) vom Meßpunkt (P) ermittelt wird. Diese Normalgeschwindigkeit ($\vec{v}_N$) dient dazu den Basispunkt ($m_M$) des Auswertebereiches (M) in Richtung der Kante (K) zu bewegen. Die resultierende Gesamtgeschwindigkeit ergibt sich dann durch Vektoraddition der Tangentialgeschwindigkeit ($\vec{v}_T$) und der Normalgeschwindigkeit ($\vec{v}_N$) zur Gesamtgeschwindigkeit ($\vec{v}_{ges}$).

In der nächsten Stellung wird dann durch den Videotastkopf (6) erneut ein Videobild (S) aufgenommen und durch die Steuer- und Auswerteeinheit (11) nach obigem Vorgehen ausgewertet, um erneut einen Meßpunkt (P) und Vorschubdaten für die Mechanik (8) abzuleiten. Hierdurch kann die gesamte Kontur des Werkstückes (7) automatisiert abgetastet werden.

Abschließend sei ausdrücklich erwähnt, daß es sich bei der im Zusammenhang mit den Figuren 1 und 2 gezeigten Beispiel nur um ein mögliches Ausführungsbeispiel handelt, das natürlich in vielfältiger Weise variieren kann. Beispielsweise muß die Mechanik (8) nicht, wie in Figur 1 gezeigt als Ständermechanik ausgeführt sein, sondern kann beispielsweise auch als Portalmechanik, Brückenmechanik oder als Roboterarm mit Drehgelenken vorgesehen werden.

**Patentansprüche**

1. Koordinatenmeßgerat mit einem über eine Mechanik (8) in den Koordinatenrichtungen (x, y, z) verfahrbaren Videotastkopf (6) und einer Steuer- und Auswerteeinheit (11) zur Verarbeitung der Meßwerte und zur Steuerung der Mechanik mittels Vorschubdaten, wobei die Steuer- und Auswerteeinheit (11) aus dem Videobild (S) des Videotastkopfes (6) Vorschubdaten ($\vec{v}_{ges}$) ableitet, um den Videotastkopf (6) automatisiert entlang einer unbekannten Kontur eines Werkstückes (7) zu verschieben, **dadurch gekennzeichnet, dass** zur Ermittlung der Vorschubdaten ($\vec{v}_{ges}$) eine Gerade (n) aus dem Videobild ermittelt wird, wobei zur Ermittlung der Gerade (n) der Schwerpunkt ($s_M$) einer Fläche des Videobildes (S) berechnet wird, die entweder die Werkstückoberfläche oder nicht die Werkstückoberfläche abbildet und der so ermittelte Flächenschwerpunkt ($s_M$) über eine Gerade mit einem Basispunkt ($m_M$) zur Geraden (n) verbunden wird, und ein Schnittpunkt zwischen der Geraden (n) und der Kante des Werkstückes ermittelt wird und wobei hieraus die Vorschubdaten so abgeleitet werden, dass ein Vorschub normal zur Geraden (n) erfolgt und zusätzlich ein Vorschub entlang der Geraden (n) so erfolgt, dass der Basispunkt ($m_M$) in Richtung auf die Kante (K) zu bewegt wird.

2. Koordinatenmeßgerät nach Anspruch 1, **dadurch gekennzeichnet, daß** die Gerade (n) näherungsweise von einem Basispunkt ($m_M$) aus normal zu einer die Kontur definierenden Kante (K) des Werkstückes (7) verläuft.

3. Koordinatenmeßgerät nach Anspruch 1 oder 2, **dadurch gekennzeichnet, daß** zur Ermittlung der Vorschubdaten ($\vec{v}_{ges}$) ein Auswertebereich (M) des Videobildes (S) ausgewertet wird, der den Basispunkt ($m_M$) enthält.

4. Koordinatenmeßgerät nach Anspruch 3, **dadurch gekennzeichnet, daß** der Auswertebereich (M) ein Kreis ist und der Basispunkt ($m_M$) der Mittelpunkt des Kreises ist.

5. Koordinatenmeßgerät nach einem der Ansprüche 1 bis 4, **dadurch gekennzeichnet, daß** der Schnittpunkt der Geraden (n) mit der Kante (K) des Werkstückes (7) als Meßpunkt (P) aufgezeichnet wird.

6. Koordinatenmeßgerät nach einem der Ansprüche 1 bis 5, **dadurch gekennzeichnet, daß** der Vorschub normal zur Geraden (n) tangential zur Kante (K) des Werkstückes (7) erfolgt.

7. Koordinatenmeßgerät nach Anspruch 6, **dadurch gekennzeichnet, daß** die Vorschubdaten so ermittelt werden, daß der Vorschub normal zur Geraden (n) einen konstanten Betrag erhält und der Vorschub in Richtung der Geraden (n) proportional zum Abstand zwischen dem Basispunkt ($m_M$) und dem Schnittpunkt der Geraden (n) mit der Kante (K) des Werkstückes (7) ist.

8. Koordinatenmeßgerät nach Anspruch 6 oder 7, **dadurch gekennzeichnet, daß** die Vorschubdaten eine Vorschubgeschwindigkeit ist, die sich aus einer Normalgeschwindigkeit ($\vec{v}_N$) entlang der Geraden (n) und einer Tangentialgeschwindigkeit ($\vec{v}_T$) lotrecht zur Geraden (n) zusammensetzt.

**9.** Verfahren zur Steuerung der Mecharuk (8) eines Koordinatenmeßgerätes mit einem Videotastkopf in den Koordinatenrichtungen (x, y, z) umfassend folgende Verfahrensschritte:

- aufnehmen eines Videobildes (S) des Videotastkopfes (6)
- ableiten von Vorschubdaten aus dem Videobild (S), um den Videotastkopf (6) automatisiert entlang einer unbekannten Kontur eines Werkstückes (7) zu verschieben
- verschieben des Videotastkopfes (6) entsprechend den Vorschubdaten durch die Mechanik (8)

**dadurch gekennzeichnet, daß**
zur Ermittlung der Vorschubdaten ($\vec{v}_{ges}$) eine Gerade (n) aus dem Videobild (S) ermittelt wird, wobei zur Ermittlung der Gerade (n) der Schwerpunkt ($s_M$) einer Fläche des Videobildes (S) berechnet wird, die entweder die Werkstückoberfläche oder nicht die Werkstückoberfläche abbildet und der so ermittelte Flächenschwerpunkt ($s_M$) über eine Gerade mit einem Basispunkt ($m_M$) zur Geraden (n) verbunden wird,
und ein Schnittpunkt zwischen der Geraden (n) und der Kante des Werkstückes ermittelt wird und wobei hieraus die Vorschubdaten so abgeleitet werden, dass ein Vorschub normal zur Geraden (n) erfolgt und zusätzlich ein Vorschub entlang der Geraden (n) so erfolgt, dass der Basispunkt ($m_M$) in Richtung auf die Kante (K) zu bewegt wird.

**10.** Verfahren nach Anspruch 9, **dadurch gekennzeichnet, dass** die Gerade (n) näherungsweise lotrecht von einem Basispunkt ($m_M$) aus zu einer die Kontur definierenden Kante (K) des Werkstückes (7) verläuft.

**11.** Verfahren nach einem der Ansprüche 9 oder 10, **dadurch gekennzeichnet, daß** zur Ermittlung der Vorschubdaten ($\vec{v}_{ges}$) ein Auswertebereich (M) des Videobildes (S) ausgewertet wird, der den Basispunkt ($m_M$) enthält.

**12.** Verfahren nach Anspruch 11, **dadurch gekennzeichnet, daß** der Auswertebereich (M) ein Kreis ist und der Basispunkt ($m_M$) der Mittelpunkt dieses Kreises ist.

**13.** Verfahren nach einem der Ansprüche 9 bis 12, **dadurch gekennzeichnet, daß** der Schnittpunkt der Geraden (n) mit der Kante (K) des Werkstückes (7) als Meßpunkt (P) aufgezeichnet wird.

**14.** Verfahren nach einem der Ansprüche 9 bis 13, **dadurch gekennzeichnet, daß** der Vorschub normal zur Geraden (n) tangential zur Kante (K) des Werkstückes (7) erfolgt.

**15.** Verfahren nach Anspruch 14, **dadurch gekennzeichnet, daß** die Vorschubdaten so ermittelt werden, daß der Vorschub normal zur Geraden (n) einen konstanten Betrag erhält und der Vorschub in Richtung der Geraden (n) proportional zum Abstand zwischen dem Basispunkt ($m_M$) und dem Schnittpunkt der Geraden (n) mit der Kante (K) des Werkstückes (7) ist.

**16.** Verfahren nach Anspruch 14 oder 15, **dadurch gekennzeichnet, daß** die Vorschubdaten eine Vorschubgeschwindigkeit ist, die sich aus einer Normalgeschwindigkeit ($\vec{v}_N$) entlang der Geraden (n) und einer Tangentialgeschwindigkeit ($\vec{v}_T$) lotrecht zur Geraden (n) zus ammensetzt.

**Claims**

**1.** Coordinate measuring machine having a video probe head (6), which can be moved in the coordinate directions (x, y, z) via a mechanism (8), and a control and evaluation unit (11) for processing the measured values and for controlling the mechanism by means of feed data, the control and evaluation unit (11) deriving feed data ($\bar{v}_{ges}$) from the video image (S) of the video probe head (6) in order to displace the video probe head (6) in an automated fashion along an unknown contour of a workpiece (7), **characterized in that** in order to determine the feed data ($\bar{v}_{ges}$) a straight line (n) is determined from the video image, in which case in order to determine the straight line (n) the centroid ($s_M$) of an area of the video image (S) is calculated which either images the workpiece surface or does not image the workpiece surface, and the area centroid ($s_M$) thus determined is connected via a straight line to a base point ($m_M$) in relation to the straight line (n), and a point of intersection between the straight line (n) and the edge of the workpiece is determined, and the feed data are derived therefrom such that a feed takes place normal to the straight line (n) and, in addition, a feed takes place along the straight line (n) such that the base point ($m_M$) is moved in a direction towards the edge (K).

**2.** Coordinate measuring machine according to Claim 1, **characterized in that** the straight line (n) runs approximately from a base point ($m_M$) in a fashion normal to an edge (K) of the workpiece (7) which defines the contour.

**3.** Coordinate measuring machine according to Claim 1 or 2, **characterized in that** an evaluation region (M) of the video image (S) which includes the base point ($m_M$) is evaluated in order to determine the

feed data ($\bar{v}_{ges}$).

4. Coordinate measuring machine according to Claim 3, **characterized in that** the evaluation region (M) is a circle and the base point ($m_M$) is the centre of the circle.

5. Coordinate measuring machine according to one of Claims 1 to 4, **characterized in that** the point of intersection of the straight line (n) with the edge (K) of the workpiece (7) is recorded as measuring point (P).

6. Coordinate measuring machine according to one of Claims 1 to 5, **characterized in that** the feed takes place in a fashion normal to the straight line (n) and tangential to the edge (K) of the workpiece (7).

7. Coordinate measuring machine according to Claim 6, **characterized in that** the feed data are determined such that the feed normal to the straight line (n) is imparted a constant value, and the feed in the direction of the straight line (n) is proportional to the distance between the base point ($m_M$) and the point of intersection of the straight line (n) with the edge (K) of the workpiece (7).

8. Coordinate measuring machine according to Claim 6 or 7, **characterized in that** the feed data is a feed rate which is composed of a normal rate ($\bar{v}_N$) along the straight line (n) and a tangential rate ($\bar{v}_T$) perpendicular to the straight line (n).

9. Method for controlling the mechanism (8) of a coordinate measuring machine having a video probe head in the coordinate directions (x, y, z), comprising the following method steps:

   - recording a video image (S) of the video probe head (6),
   - deriving feed data from the video image (S) in order to displace the video probe head (6) in an automated fashion along an unknown contour of a workpiece (7), and
   - displacing the video probe head (6) by the mechanism (8) in accordance with the feed data,

   **characterized in that** in order to determine the feed data ($\bar{v}_{ges}$) a straight line (n) is determined from the video image (S), in which case in order to determine the straight line (n) the centroid ($s_M$) of an area of the video image (S) is calculated which either images the workpiece surface or does not image the workpiece surface, and the area centroid ($s_M$) thus determined is connected via a straight line to a base point ($m_M$) in relation to the straight line (n), and a point of intersection between the straight line (n) and the edge of the workpiece is determined, and the feed data are derived therefrom such that a feed takes place normal to the straight line (n) and, in addition, a feed takes place along the straight line (n) such that the base point ($m_M$) is moved in a direction towards the edge (K).

10. Method according to Claim 9, **characterized in that** the straight line (n) runs approximately perpendicularly from a base point ($m_M$) to an edge (K), defining the contour, of the workpiece (7).

11. Method according to one of Claims 9 or 10, **characterized in that** an evaluation region (M) of the video image (S) which includes the base point ($m_M$) is evaluated in order to determine the feed data ($\bar{v}_{ges}$).

12. Method according to Claim 11, **characterized in that** the evaluation region (M) is a circle and the base point ($m_M$) is the centre of this circle.

13. Method according to one of Claims 9 to 12, **characterized in that** the point of intersection of the straight line (n) with the edge (K) of the workpiece (7) is recorded as measuring point (P).

14. Method according to one of Claims 9 to 13, **characterized in that** the feed takes place in a fashion normal to the straight line (n) and tangential to the edge (K) of the workpiece (7).

15. Method according to Claim 14, **characterized in that** the feed data are determined such that the feed normal to the straight line (n) is imparted a constant value, and the feed in the direction of the straight line (n) is proportional to the distance between the base point ($m_M$) and the point of intersection of the straight line (n) with the edge (K) of the workpiece (7).

16. Method according to Claim 14 or 15, **characterized in that** the feed data is a feed rate which is composed of a normal rate ($\bar{v}_N$) along the straight line (n) and a tangential rate ($\bar{v}_T$) perpendicular to the straight line (n).

## Revendications

1. Appareil de mesure de coordonnées qui présente une tête de palpage vidéo (6) qui peut être déplacée par une mécanique (8) dans les directions de coordonnées (x, y, z) et une unité de commande et d'évaluation (11) qui traite les valeurs de mesure et qui commande la mécanique au moyen de données d'avancement, l'unité de commande et d'évaluation (11) déduisant de l'image vidéo (S) de la tête de palpage vidéo (6) des données d'avancement ($v_{ges}$) pour déplacer la tête de palpage vidéo (6) de manière automatisée le long d'un contour inconnu d'une pièce (7), **caractérisé en ce que** pour déterminer les données d'avancement ($v_{ges}$), on définit une droite (n) dans l'image vidéo, et pour définir la droite (n), on calcule le centre de gravité ($S_M$) d'une surface de l'image vidéo (S) qui forme la surface de la pièce ou ne forme pas la surface de la pièce, on relie le centre de gravité ($S_M$) de la surface ainsi déterminé par une droite à un point de base ($m_M$) pour former la droite (n), on détermine un point d'intersection entre la droite (n) et l'arête de la pièce, on en déduit les données d'avancement de telle sorte que l'avancement s'effectue perpendiculairement à la droite (n) et que de plus un avancement le long de la droite (n) ait lieu de telle sorte que le point de base ($m_M$) soit déplacé en direction de l'arête (K).

2. Appareil de mesure de coordonnées selon la revendication 1, **caractérisé en ce que** partant d'un point de base ($m_M$), la droite (n) s'étend approximativement à la perpendiculaire d'une arête (K) qui définit le contour de la pièce (7).

3. Appareil de mesure de coordonnées selon les revendications 1 ou 2, **caractérisé en ce que** pour déterminer les données d'avancement ($v_{ges}$), on évalue une plage d'évaluation (M) de l'image vidéo (S) qui contient le point de base ($m_M$).

4. Appareil de mesure de coordonnées selon la revendication 3, **caractérisé en ce que** la plage d'évaluation (M) est un cercle, le point de base ($m_M$) étant le centre du cercle.

5. Appareil de mesure de coordonnées selon l'une des revendications 1 à 4, **caractérisé en ce que** le point d'intersection de la droite (n) avec l'arête (K) de la pièce (7) est appelé point de mesure (P).

6. Appareil de mesure de coordonnées selon l'une des revendications 1 à 5, **caractérisé en ce que** l'avancement s'effectue perpendiculairement à la droite (n) et tangentiellement à l'arête (K) de la pièce (7).

7. Appareil de mesure de coordonnées selon la revendication 6, **caractérisé en ce que** les données d'avancement sont déterminées de telle sorte que l'avancement perpendiculairement à la droite (n) reçoive une grandeur constante et que l'avancement dans la direction de la droite (n) soit proportionnel à la distance entre le point de base ($m_M$) et le point d'intersection de la droite (n) avec l'arête (K) de la pièce (7).

8. Appareil de mesure de coordonnées selon les revendications 6 ou 7, **caractérisé en ce que** les données d'avancement sont une vitesse d'avancement qui est constituée d'une vitesse normale ($v_N$) le long de la droite (n) et d'une vitesse tangentielle ($v_T$) perpendiculaire à la droite (n).

9. Procédé de commande de la mécanique (8) d'un appareil de mesure de coordonnées qui présente une tête de palpage vidéo, dans les directions de coordonnées (x, y, z), qui comprend les étapes qui consistent à :

   - faire enregistrer une image vidéo (S) par la tête de palpage vidéo (6),
   - déduire de l'image vidéo (S) des données d'avancement pour déplacer la tête de palpage vidéo (6) de manière automatisée le long d'un contour inconnu d'une pièce (7),
   - faire déplacer la tête de palpage vidéo (6) par la mécanique (8) en correspondance aux données d'avancement,

   **caractérisé en ce que**
   pour déterminer les données d'avancement ($v_{ges}$), on définit une droite (n) dans l'image vidéo, et pour définir la droite (n), on calcule le centre de gravité ($S_M$) d'une surface de l'image vidéo (S) qui forme la surface de la pièce ou ne forme pas la surface de la pièce, on relie le centre de gravité ($S_M$) de la surface ainsi déterminé par une droite à un point de base ($m_M$) pour former la droite (n), on détermine un point d'intersection entre la droite (n) et l'arête de la pièce, on en déduit les données d'avancement de telle sorte que l'avancement s'effectue perpendiculairement à la droite (n) et que de plus un avancement le long de la droite (n) ait lieu de telle sorte que le point de base ($m_M$) soit déplacé en direction de l'arête (K).

10. Procédé selon la revendication 9, **caractérisé en ce que** partant d'un point de base ($m_M$), la droite (n) est approximativement perpendiculaire à une arête (K) qui définit le contour de la pièce (7).

11. Procédé selon l'une des revendications 9 ou 10, **caractérisé en ce que** pour déterminer les données d'avancement ($v_{ges}$), on évalue une plage d'évaluation (M) de l'image vidéo (S) qui contient le point de base ($m_M$)

12. Procédé selon la revendication 11, **caractérisé en ce que** la plage d'évaluation (M) est un cercle, le point de base ($m_M$) étant le centre de ce cercle.

13. Procédé selon l'une des revendications 9 à 12, **caractérisé en ce que** le point d'intersection de la droite (n) avec l'arête (K) de la pièce (7) est appelé point de mesure (P).

**14.** Procédé selon l'une des revendications 9 à 13, **caractérisé en ce que** l'avancement s'effectue perpendiculairement à la droite (n) et tangentiellement à l'arête (K) de la pièce (7).

**15.** Procédé selon la revendication 14, **caractérisé en ce que** les données d'avancement sont déterminées de telle sorte que l'avancement perpendiculairement à la droite (n) reçoive une grandeur constante et que l'avancement dans la direction de la droite (n) soit proportionnel à la distance entre le point de base ($m_M$) et le point d'intersection de la droite (n) avec l'arête (K) de la pièce (7).

**16.** Procédé selon les revendications 14 ou 15, **caractérisé en ce que** les données d'avancement sont une vitesse d'avancement qui est constituée d'une vitesse normale ($v_N$) le long de la droite (n) et d'une vitesse tangentielle ($v_T$) perpendiculaire à la droite (n).

# FIG.1

# FIG.2